(19) Europäisches Patentamt
European Patent Office
Office européen des brevets

(11) **EP 4 580 136 A1**

(12) **EUROPEAN PATENT APPLICATION**
published in accordance with Art. 153(4) EPC

(43) Date of publication:
**02.07.2025 Bulletin 2025/27**

(21) Application number: **23881695.3**

(22) Date of filing: **17.10.2023**

(51) International Patent Classification (IPC):
***H04L 27/04*** *(2006.01)*

(52) Cooperative Patent Classification (CPC):
**H04L 27/04; H04L 27/06**

(86) International application number:
**PCT/CN2023/125033**

(87) International publication number:
**WO 2024/088116 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.10.2022 CN 202211307799
29.11.2022 CN 202211518236**

(71) Applicant: **Huawei Technologies Co., Ltd.
Shenzhen, Guangdong 518129 (CN)**

(72) Inventor: **LI, Qiang
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **INFORMATION PROCESSING METHOD AND DEVICE**

(57) Embodiments of this application provide an information processing method and apparatus. The method includes: performing first modulation on first data to generate a first amplitude shift keying signal, where the first amplitude shift keying signal is carried on at least one first frequency band; performing second modulation on the first data to generate a second amplitude shift keying signal, where the second amplitude shift keying signal is carried on at least one second frequency band, and at least one second frequency band and the at least one first frequency band have different frequencies; and sending the first amplitude shift keying signal and the second amplitude shift keying signal. In this way, a larger frequency diversity gain can be obtained, and deep fading caused by a narrow bandwidth for transmitting an amplitude shift keying signal is avoided, so that a receive end can accurately demodulate the amplitude shift keying signal, to improve demodulation performance of the amplitude shift keying signal.

<u>600</u>

```
┌─────────────────────────────────────┐
│ Perform first modulation on first   │  S610
│ data to generate a first amplitude  │
│ shift keying signal, where the first│
│ amplitude shift keying signal is    │
│ carried on a first frequency band   │
└─────────────────────────────────────┘
              │
              ▼
┌─────────────────────────────────────┐
│ Perform second modulation on the    │  S620
│ first data to generate a second     │
│ amplitude shift keying signal, where│
│ the second amplitude shift keying   │
│ signal is carried on a second       │
│ frequency band                      │
└─────────────────────────────────────┘
              │
              ▼
┌─────────────────────────────────────┐
│ Send the first amplitude shift      │  S630
│ keying signal and the second        │
│ amplitude shift keying signal       │
└─────────────────────────────────────┘
```

FIG. 6

## Description

This application claims priority to Chinese Patent Application No. 202211307799.X, filed with the China National Intellectual Property Administration on October 24, 2022 and entitled "MEASUREMENT METHOD", which is incorporated herein by reference in its entirety.

This application claims priority to Chinese Patent Application No. 202211518236.5, filed with the China National Intellectual Property Administration on November 29, 2022 and entitled "INFORMATION PROCESSING METHOD AND APPARATUS", which is incorporated herein by reference in its entirety.

## TECHNICAL FIELD

Embodiments of this application relate to the field of communication technologies, and more specifically, to an information processing method and apparatus.

## BACKGROUND

Many current cellular mobile communication networks, for example, a 4th generation (4th Generation, 4G) long term evolution (long term evolution, LTE) system and 5th generation (5th Generation, 5G) new radio (New Radio, NR), use an OFDM modulation technology. A main purpose of a cellular network is to provide a mobile broadband (mobile broadband, MBB) service, for example, performing high-speed internet access, video browsing, and file downloading through a mobile device like a mobile phone or a tablet.

However, in recent years, services provided by the cellular network are becoming diversified. Many user equipments require very low communication rates, but have very high requirements for low costs and low power consumption of receivers, for example, an internet of things device, a wearable device (a smartwatch), or a low-power wake-up link (low power wake up radio). For these terminal devices, OFDM modulation is not an appropriate modulation scheme, because an OFDM receiver needs to perform accurate time-frequency synchronization and complex signal processing, and requires high costs and power consumption. Therefore, a simpler modulation scheme is considered in the industry to serve these devices. For example, amplitude shift keying modulation is an ideal choice.

Therefore, an information processing method is urgently needed, to improve demodulation performance while ensuring low-power demodulation.

## SUMMARY

Embodiments of this application provide an information processing method and apparatus, to improve demodulation performance of a modulation signal.

According to a first aspect, an information processing method is provided, where the method includes: performing first modulation on first data to generate a first amplitude shift keying signal, where the first amplitude shift keying signal is carried on at least one first frequency band; performing second modulation on the first data to generate a second amplitude shift keying signal, where the second amplitude shift keying signal is carried on at least one second frequency band, and the at least one second frequency band and the at least one first frequency band have different frequencies; and sending the first amplitude shift keying signal and the second amplitude shift keying signal.

It should be understood that the steps included in the method in this application may be independently implemented by one device, or may be separately implemented by a plurality of different devices (for example, in a distributed system, a plurality of different devices complete corresponding operations).

It should be further understood that an amplitude shift keying signal in this application may be an amplitude shift keying ASK signal or an on-off keying OOK modulation signal. This is not limited in this application. The information processing method provided in this application is described by using an amplitude shift keying signal as an example. A person skilled in the art can adaptively deduce another modulation signal by analogy, which is also applicable to the technical solutions in this application.

It should be further understood that, the sending the first amplitude shift keying signal and the second amplitude shift keying signal may be sending the first amplitude shift keying signal and the second amplitude shift keying signal in parallel, or sending the first amplitude shift keying signal and the second amplitude shift keying signal at different time. This is not limited in this application.

According to the technical solutions provided in this application, the first data is modulated to generate the at least two amplitude shift keying signals, and the at least two amplitude shift keying signals are carried, based on a frequency of each of the at least two amplitude shift keying signals, on frequency bands corresponding to the frequencies of the signals. Therefore, the at least two amplitude shift keying signals are respectively carried on at least two frequency bands of different frequencies for transmission. The at least two amplitude shift keying signals are transmitted on the at least two frequency bands, so that a larger frequency diversity gain can be obtained, and deep fading caused by a narrow bandwidth for transmitting the amplitude shift keying signal is avoided. In this way, a receive end can accurately demodulate the amplitude shift keying signal, to improve demodulation performance of the amplitude shift keying signal.

With reference to the first aspect, in some implementations of the first aspect, the first amplitude shift keying signal and the second amplitude shift keying signal correspond to a same modulation symbol.

Based on the foregoing technical solutions, the first modulation and the second modulation are performed on the first data, so that the generated first amplitude shift keying signal and the generated second amplitude shift keying signal correspond to the same modulation symbol. To be specific, modulation symbols transmitted on different frequency bands are the same, and frequencies of modulation symbols corresponding to different frequency bands are different. When deep fading occurs on a signal transmitted on one of at least one frequency band due to a frequency selective characteristic of a channel, and no deep fading occurs on a signal transmitted on another frequency band, the receive end can still accurately demodulate a signal sent by a transmit end, to improve demodulation performance of the amplitude shift keying signal.

With reference to the first aspect, in some implementations of the first aspect, the sending the first amplitude shift keying signal and the second amplitude shift keying signal includes: sending the first amplitude shift keying signal on a first subcarrier, and sending the second amplitude shift keying signal on a second subcarrier, where the first subcarrier is subcarriers with consecutive frequencies in the first frequency band, and the second subcarrier is subcarriers with consecutive frequencies in the second frequency band.

Based on the foregoing technical solutions, the first amplitude shift keying signal is sent on consecutive subcarriers, and the second amplitude shift keying signal is sent on consecutive subcarriers, so that a larger frequency diversity gain can be obtained, and deep fading caused by a narrow bandwidth for transmitting the amplitude shift keying signal is avoided. In this way, a receive end can accurately demodulate the amplitude shift keying signal, to improve demodulation performance of the amplitude shift keying signal.

With reference to the first aspect, in some implementations of the first aspect, the sending the first amplitude shift keying signal and the second amplitude shift keying signal includes: sending the first amplitude shift keying signal on a first subcarrier, and sending the second amplitude shift keying signal on a second subcarrier. First subcarriers are inconsecutive subcarriers that are in the first frequency band and whose frequency band spacing is a first value. Second subcarriers are inconsecutive subcarriers that are in the second frequency band and whose frequency band spacing is a second value. The first value and the second value are positive integers greater than or equal to 1.

It should be understood that the first value may be the same as or different from the second value.

Based on the foregoing technical solutions, the first amplitude shift keying signal is sent on inconsecutive subcarriers, and the second amplitude shift keying signal is sent on inconsecutive subcarriers, so that an amplitude shift keying signal with a low peak-to-average ratio can be generated, to improve demodulation performance of the amplitude shift keying signal.

With reference to the first aspect, in some implementations of the first aspect, that the first frequency band and the second frequency band have different frequencies includes: A frequency spacing between the first frequency band and the second frequency band is a frequency value greater than or equal to a bandwidth of the first frequency band.

Based on the foregoing technical solutions, the frequency spacing between the first frequency band and the second frequency band is greater than or equal to the frequency value of the bandwidth of the first frequency band (for example, a coherent bandwidth), a frequency difference between frequency bands is large, and a correlation between channel responses of different frequency bands is low. Therefore, it may be considered that different frequency bands are independent of each other, and an obtained frequency diversity gain is also obvious.

With reference to the first aspect, in some implementations of the first aspect, the sending the first amplitude shift keying signal and the second amplitude shift keying signal includes: determining, in a first time period based on the first data, to transmit a modulation symbol ON in an amplitude shift keying signal on a third frequency band and transmit a modulation symbol OFF in the amplitude shift keying signal on a fourth frequency band, where the third frequency band is one of the at least one first frequency band and the at least one second frequency band, and the fourth frequency band is all frequency bands in the at least one first frequency band and the at least one second frequency band other than the third frequency band.

Based on the foregoing technical solutions, in the first time period, the modulation symbol ON is transmitted on one of the at least one first frequency band and the at least one second frequency band, and the modulation symbol OFF is transmitted on the remaining frequency band. In this technical solution, information is transmitted based on a frequency band on which the modulation symbol ON is transmitted, and therefore, it may also be considered as a frequency shift keying (FSK) modulation. If there are more than two frequency bands, more than one bit of information can be transmitted on each symbol. This improves a transmission rate.

With reference to the first aspect, in some implementations of the first aspect, the performing first modulation on first data to generate a first amplitude shift keying signal, where the first amplitude shift keying signal is carried on the first frequency band includes: performing channel encoding on the first data to determine second data; performing the first modulation on a first part of the second data to generate the first amplitude shift keying signal; and performing the second modulation on a second part of the second data to generate the second amplitude shift keying signal, where the second data includes the first part and the second part, and when the first amplitude shift keying signal is carried on at least two first frequency bands, the first amplitude shift keying signal includes at least two amplitude shift keying modulation symbols, and the at least two amplitude shift keying modulation symbols are respectively carried on the at least two first frequency bands.

Based on the foregoing solutions, the channel encoding is first performed on the first data of the transmit end to obtain the second data. This improves an error correction capability of the receive end. Then, at least two parts of data included in the second data are separately modulated, to obtain the first amplitude shift keying signal and the second amplitude shift keying signal, and the amplitude shift keying signals are transmitted on the at least two frequency bands, to obtain a larger frequency diversity gain. The first amplitude shift keying signal includes the at least two amplitude shift keying modulation symbols. When the first amplitude shift keying signal is carried on the at least two first frequency bands, the at least two amplitude shift keying modulation symbols are respectively carried on the at least two first frequency bands for transmission. A transmission rate is increased by decreasing symbol rates of the amplitude shift keying modulation symbols.

According to a second aspect, an information processing apparatus is provided. The apparatus includes: a processing unit, configured to perform first modulation on first data to generate a first amplitude shift keying signal, where the first amplitude shift keying signal is carried on at least one first frequency band, and the processing unit is further configured to perform second modulation on the first data to generate a second amplitude shift keying signal, where the second amplitude shift keying signal is carried on at least one second frequency band, and the at least one second frequency band and the at least one first frequency band have different frequencies; and a transceiver unit, configured to send the first amplitude shift keying signal and the second amplitude shift keying signal.

According to the information processing apparatus provided in this application, at least two amplitude shift keying signals are transmitted on at least two frequency bands, so that a larger frequency diversity gain can be obtained, and deep fading caused by a narrow bandwidth for transmitting the amplitude shift keying signal is avoided. In this way, a receive end can accurately demodulate the amplitude shift keying signal, to improve demodulation performance of the amplitude shift keying signal.

With reference to the second aspect, in some implementations of the second aspect, the first amplitude shift keying signal and the second amplitude shift keying signal correspond to a same amplitude shift keying modulation symbol.

Based on the foregoing technical solutions, the first modulation and the second modulation are performed on the first data, so that the generated first amplitude shift keying signal and the generated second amplitude shift keying signal correspond to the same modulation symbol. When deep fading occurs on a signal transmitted on one of at least one frequency band due to a frequency selective characteristic of a channel, and no deep fading occurs on a signal transmitted on another frequency band, the receive end can still accurately demodulate a signal sent by a transmit end, to improve demodulation performance of the amplitude shift keying signal.

With reference to the second aspect, in some implementations of the second aspect, that the transceiver unit is configured to send the first amplitude shift keying signal and the second amplitude shift keying signal includes: sending the first amplitude shift keying signal on a first subcarrier, and sending the second amplitude shift keying signal on a second subcarrier, where the first subcarrier is subcarriers with consecutive frequencies in the first frequency band, and the second subcarrier is subcarriers with consecutive frequencies in the second frequency band.

Based on the foregoing technical solutions, the first amplitude shift keying signal is sent on consecutive subcarriers, and the second amplitude shift keying signal is sent on consecutive subcarriers, so that a larger frequency diversity gain can be obtained, and deep fading caused by a narrow bandwidth for transmitting the amplitude shift keying signal is avoided. In this way, a receive end can accurately demodulate the amplitude shift keying signal, to improve demodulation performance of the amplitude shift keying signal.

With reference to the second aspect, in some implementations of the second aspect, that the transceiver unit is configured to send the first amplitude shift keying signal and the second amplitude shift keying signal includes: sending the first amplitude shift keying signal on a first subcarrier, and sending the second amplitude shift keying signal on a second subcarrier. First subcarriers are inconsecutive subcarriers that are in the first frequency band and whose frequency band spacing is a first value. Second subcarriers are inconsecutive subcarriers that are in the second frequency band and whose frequency band spacing is a second value. The first value and the second value are positive integers greater than or equal to 1.

It should be understood that the first value may be the same as or different from the second value.

Based on the foregoing technical solutions, the first amplitude shift keying signal is sent on inconsecutive subcarriers, and the second amplitude shift keying signal is sent on inconsecutive subcarriers, so that an amplitude shift keying signal with a low peak-to-average ratio can be generated, to improve demodulation performance of the amplitude shift keying signal.

With reference to the second aspect, in some implementations of the second aspect, that the first frequency band and the second frequency band have different frequencies includes: A frequency spacing between the first frequency band and the second frequency band is a frequency value greater than or equal to a bandwidth of the first frequency band.

Based on the foregoing technical solutions, the frequency spacing between the first frequency band and the second frequency band is greater than or equal to the frequency value of the bandwidth of the first frequency band (for example, a coherent bandwidth), a frequency difference between frequency bands is large, and a correlation between channel responses of different frequency bands is low. Therefore, it may be considered that different frequency bands are independent of each other, and an obtained frequency diversity gain is also obvious.

With reference to the second aspect, in some implementations of the second aspect, that the transceiver unit is configured to send the first amplitude shift keying signal and the second amplitude shift keying signal includes: in a first time period, the transceiver unit is further configured to determine, based on the first data, to transmit a modulation symbol ON in an amplitude shift keying signal on a third frequency band and transmit a modulation symbol OFF in the amplitude shift keying signal on a fourth frequency band, where the third frequency band is one of the at least one first frequency band and the at least one second frequency band, and the fourth frequency band is all frequency bands in the at least one first frequency band and the at least one second frequency band other than the third frequency band.

Based on the foregoing technical solutions, in the first time period, the modulation symbol ON is transmitted on one of the at least one first frequency band and the at least one second frequency band, and the modulation symbol OFF is transmitted on the remaining frequency band. In this technical solution, information is transmitted based on a frequency band on which the modulation symbol ON is transmitted, and therefore, it may also be considered as frequency shift keying (FSK) modulation. If there are more than two frequency bands, more than one bit of information can be transmitted on each symbol. This improves a transmission rate.

With reference to the second aspect, in some implementations of the second aspect, that the processing unit is configured to perform first modulation on first data to generate a first amplitude shift keying signal, where the first amplitude shift keying signal is carried on the first frequency band includes: The processing unit is further configured to perform channel encoding on the first data to determine second data;

the processing unit is further configured to perform the first modulation on a first part of the second data to generate the first amplitude shift keying signal; and the processing unit is further configured to perform the second modulation on a second part of the second data to generate the second amplitude shift keying signal, where the second data includes the first part and the second part, and when the first amplitude shift keying signal is carried on at least two first frequency bands, the first amplitude shift keying signal includes at least two amplitude shift keying modulation symbols, and the at least two amplitude shift keying modulation symbols are respectively carried on the at least two first frequency bands.

Based on the foregoing solutions, the channel encoding is first performed on the first data of the transmit end to obtain the second data. This improves an error correction capability of the receive end. Then, at least two parts of data included in the second data are separately modulated, to obtain the first amplitude shift keying signal and the second amplitude shift keying signal, and the amplitude shift keying signals are transmitted on the at least two frequency bands, to obtain a larger frequency diversity gain. The first amplitude shift keying signal includes the at least two amplitude shift keying modulation symbols. When the first amplitude shift keying signal is carried on the at least two first frequency bands, the at least two amplitude shift keying modulation symbols are respectively carried on the at least two first frequency bands for transmission. A transmission rate is increased by decreasing symbol rates of the amplitude shift keying modulation symbols.

According to a third aspect, a communication apparatus is provided. The apparatus is configured to perform the method provided in the first aspect. Specifically, the apparatus may include a unit and/or a module, for example, a processing unit and/or a transceiver unit (or referred to as a communication unit), configured to perform the method provided in any one of the implementations of the first aspect.

In an implementation, the apparatus is a communication device (for example, a terminal device or a network device). When the apparatus is a communication device, the communication unit may be a transceiver or a transceiver unit, or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal device or a network device). When the apparatus is the chip, the chip system, or the circuit used in the communication device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fourth aspect, a communication apparatus is provided. The apparatus includes: a memory, configured to store a program; and at least one processor, configured to execute a computer program or instructions stored in the memory, to perform the method provided in any one of the implementations of the first aspect.

In an implementation, the apparatus is a communication device (for example, a terminal device or a network device).

In another implementation, the apparatus is a chip, a chip system, or a circuit used in a communication device (for example, a terminal device or a network device).

According to a fifth aspect, this application provides a processor, configured to perform the method according to the foregoing aspects.

Operations such as sending and obtaining/receiving related to the processor may be understood as operations such as output and input of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable medium stores program code to be executed by a device, and the program code is for performing the method provided in any one of the implementations of the first aspect.

According to a seventh aspect, a computer program product including instructions is provided. When the computer program product runs on a computer, the computer is enabled to perform the method provided in any one of the implementations of the first aspect.

According to an eighth aspect, a chip is provided. The chip includes a processor and a communication interface, and the processor reads, through the communication interface, instructions stored in a memory, to perform the method provided in any one of the implementations of the first aspect.

Optionally, in an implementation, the chip further includes a memory. The memory stores a computer program or instructions, the processor is configured to execute the computer program or the instructions stored in the memory, and when the computer program or the instructions are executed, the processor is configured to perform the method provided in any one of the implementations of the first aspect.

According to a ninth aspect, a communication system is provided, including the foregoing terminal device and the foregoing network device.

**BRIEF DESCRIPTION OF DRAWINGS**

FIG. 1 is a diagram of a wireless communication system 100 applicable to an embodiment of this application;

FIG. 2 is a diagram of a wireless communication system 200 applicable to an embodiment of this application;

FIG. 3 is a diagram of a waveform in OOK modulation;

FIG. 4 is a diagram of modulating an OOK signal by an OFDM transmitter;

FIG. 5 is a diagram of comparison between deep fading caused by transmission bandwidths;

FIG. 6 is a schematic flowchart of an information processing method 600 according to an embodiment of this application;

FIG. 7(1) and FIG. 7(2) are a diagram of transmission of a first OOK signal and a second OOK signal on different frequency bands;

FIG. 8 is a diagram of demodulating an OOK signal by a receive end;

FIG. 9 is a diagram of comparison between waveforms obtained by demodulating OOK signals by a receive end;

FIG. 10 is a diagram of transmission of an OOK signal on a frequency band;

FIG. 11 is another diagram of demodulating an OOK signal by a receive end;

FIG. 12 is another diagram of transmission of an OOK signal on a frequency band;

FIG. 13 is a schematic flowchart of an information processing method 1300 according to an embodiment of this application;

FIG. 14(1) and FIG. 14(2) are another diagram of transmission of an OOK signal on a frequency band;

FIG. 15 is a diagram of a communication apparatus 1500 according to an embodiment of this application;

FIG. 16 is a diagram of another communication apparatus 1600 according to an embodiment of this application; and

FIG. 17 is a diagram of a chip system 1700 according to an embodiment of this application.

**DESCRIPTION OF EMBODIMENTS**

The following describes technical solutions of embodiments in this application with reference to accompanying drawings.

The technical solutions in embodiments of this application may be applied to various communications systems such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th Generation, 5G) system, or a new radio (New radio, NR) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

The technical solutions of this application may also be applied to a short-range wireless communication system, for example, a wireless personal area network (wireless personal area network, WPAN). The WPAN may be used for communication between digital auxiliary devices in a small range, such as a telephone, a computer, and an auxiliary device. Technologies that support the wireless personal area network include Bluetooth (Bluetooth), ZigBee (ZigBee), ultra wideband (ultra wideband, UWB), an infrared data association (infrared data association, IrDA) connection technology, home radio frequency (home radio frequency, HomeRF), a sidelink (sidelink) communication system, a Wi-Fi communication system, or the like.

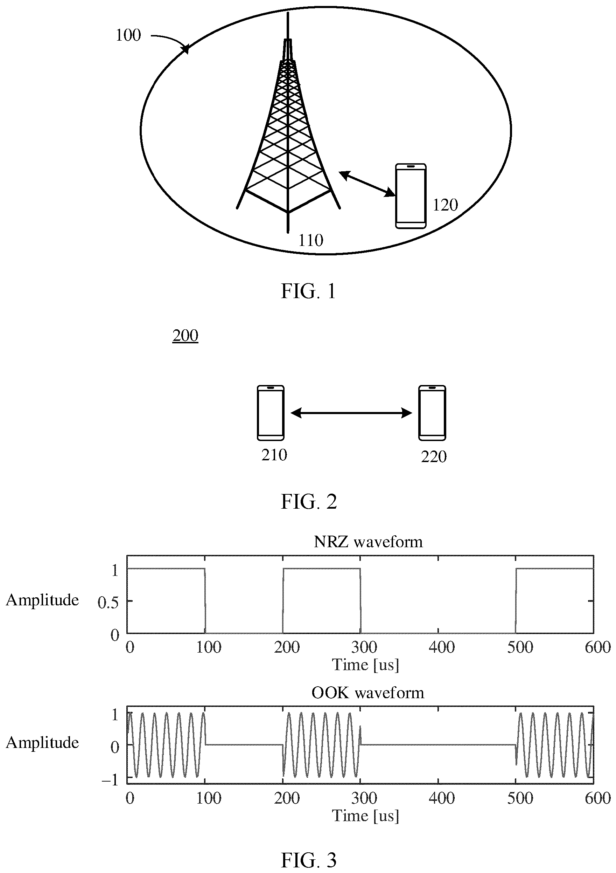

First, a communication system applicable to embodiments of this application is briefly described with reference to FIG. 1. The following is an example.

For example, FIG. 1 is a diagram of a wireless communication system 100 applicable to an embodiment of this application. As shown in FIG. 1, the wireless communication system 100 may include at least one network device, for example, a network device 110 shown in FIG. 1. The wireless communication system 100 may further include at least one terminal device, for example, a terminal device 120 shown in FIG. 1. For example, a plurality of antennas may be configured for both the network device and the terminal device, and the network device and the terminal device may communicate with each other by using a multi-antenna technology. For example, the network device sends a downlink signal to the terminal device, where the downlink signal may be modulated through OOK modulation or amplitude shift keying (amplitude shift keying, ASK) modulation. Alternatively, the terminal device sends an uplink signal to the network device, where the uplink signal may be modulated through OOK modulation or ASK modulation.

When the network device communicates with the terminal device, the network device may manage one or more cells, and one cell may include at least one terminal device. Optionally, the network device 110 and the terminal device 120 form a single-cell communication system. It is assumed that a cell is denoted as a cell #1. The network device 110 may be a network device in the cell #1, or the network device 110 may serve a terminal device (for example, the terminal device 120) in the cell #1.

It should be noted that, a cell may be understood as an area within coverage of a radio signal of the network device.

It should be understood that FIG. 1 is merely a simplified diagram of an example for ease of understanding. The wireless communication system 100 may further include another network device or may further include another terminal device that is not shown in FIG. 1.

Refer to FIG. 2. For example, FIG. 2 is a diagram of a wireless communication system 200 applicable to an embodiment of this application.

As shown in FIG. 2, the wireless communication system 200 may include at least two terminal devices, for example, a terminal device 210 and a terminal device 220 shown in FIG. 2. For example, the terminal device 210 and the terminal device 220 communicate with each other through a sidelink, and the terminal devices send signals to each other through OOK modulation or ASK modulation.

The following briefly describes terms used in this application for ease of understanding embodiments of this application.

1. On-off-keying (on-off-keying, OOK) modulation

First, the OOK modulation is to use, based on information to be modulated, an on-off non-return-to-zero line code (on-off non-return-to-zero line code, or on-off nrz line code) to generate a baseband waveform. In the on-off NRZ line code, a high level represents an information bit "1", and a zero level represents an information bit "0". For example, as shown in FIG. 3, a generated signal is represented as $s_{nrz}(t)$. Then, a carrier signal is multiplied by the generated signal $s_{nrz}(t)$ to further generate an OOK signal. Assuming that a carrier frequency for sending a signal is $f_c$, the carrier signal may be represented as $\cos(2\pi f_c t + \phi_0)$, where $\phi_0$ represents an initial phase of the carrier frequency. The generated OOK signal may be represented as:

$$s_{OOK}(t) = s_{nrz}(t)\cos(2\pi f_c t + \phi_0)$$

For details, refer to a waveform shown in an OOK waveform in FIG. 3. The OOK modulation may be understood as that a carrier signal is sent when information to be sent is "1", and no signal is sent when information to be sent is "0".

It should be understood that a receive end (which may also be referred to as a receiver in embodiments of this application) needs to use a threshold, and further determine whether energy of a symbol exceeds the threshold, to determine whether a received signal is "0" or "1", so as to complete demodulation.

It should be further understood that the OOK receiver may be implemented by using a low-complexity and low-power-consumption component, and therefore is applicable to some devices that require low costs and low power consumption, for example, an internet of things device or a sensor.

(2) Orthogonal frequency division multiplexing (orthogonal frequency division multiplexing, OFDM)

An OFDM modulation technology is a widely used modulation technology. For example, an 802.11 (Wi-Fi) system, a 4G (LTE) system, a 5G (NR) system, and the like all use the OFDM modulation technology. OFDM modulation is generally applied to a mobile broadband system, to provide a high transmission rate by using a higher communication bandwidth. In most deployment scenarios, an OFDM system can provide a transmission rate of at least 1 Mbps.

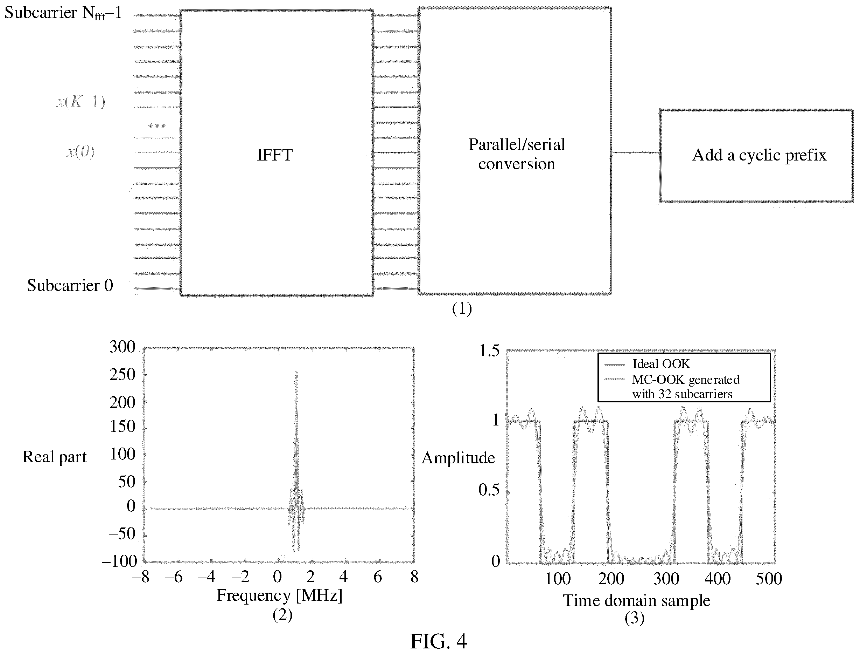

In an OFDM modulation scheme, a system bandwidth is divided into a plurality of parallel subcarriers, and data is modulated and sent on each subcarrier. Each subcarrier has a different frequency. OFDM transmission and receiving procedures are shown in FIG. 4. Data to be transmitted is first modulated and mapped to a complex-valued symbol. The complex-valued symbol may be written as $ae^{j\varphi}$, where $a$ is an amplitude of the symbol, and $\varphi$ is a phase of the symbol. Most commonly, a QAM mapping manner is used for modulation, to map information to a QAM symbol (where the QAM symbol is also a complex-valued symbol). Then, QAM symbols are mapped to different subcarriers through serial-to-parallel conversion. Symbols on the different subcarriers are input into inverse fast Fourier transform IFFT (Inverse Fast Fourier Transform), and an inverse fast Fourier transform operation is performed to convert the symbols into a time domain sequence.

In conventional OFDM symbol processing, a tail part of the time domain sequence is copied to a front end of a signal, which is referred to as a cyclic prefix (cyclic prefix, CP). A main function of the cyclic prefix is to counteract a multipath transmission delay in a radio channel. After the cyclic prefix is added, a transmitter performs digital to analog conversion (digital to analog conversion, D/A) on the signal, performs up-conversion on the signal, and then transmits the signal.

However, in recent years, services provided by a cellular network are becoming diversified. Many user equipments require very low communication rates, but have very high requirements for low costs and low power consumption of receivers, for example, an internet of things device, a wearable device (a smartwatch), or a low-power wake-up link (low power wake up radio). For these devices, OFDM is not an appropriate modulation scheme. Because an OFDM receiver needs to perform precise time-frequency synchronization and complex signal processing, high costs and power consumption are required. In the industry, a simpler modulation scheme, for example, OOK modulation, is considered to serve these devices.

Particularly, to serve different types of terminal devices, a direct practice is as follows: Two transmitters may be disposed on a base station of a mobile communication network. One transmitter is configured to serve a mobile broadband user, that is, send an OFDM signal, and the other transmitter is configured to serve a low-rate user, that is, send an OOK signal. However, in the foregoing method, hardware of an existing network device needs to be upgraded, and an OOK transmitter needs to be added on the basis of an existing OFDM transmitter. This brings great costs to a network deployer. Another practice is as follows: A transmitter still uses an existing OFDM transmitter structure but waveforms that conform to another modulation format is generated on some frequency bands through some signal processing means. For example, the OFDM transmitter may generate OOK modulation waveforms on some frequency bands.

As an example, as shown in FIG. 4, an OFDM transmitter uses IFFT with a size of N_IFFT to generate an OFDM signal, and uses K subcarriers to generate OOK signals. Signals to be modulated on the K subcarriers may be determined in a pre-calculation manner based on a waveform of an OOK signal that is expected to be generated. In this way, after an IFFT operation is performed on these signals, time-domain waveforms of generated OFDM symbols are approximated to a waveform of an OOK signal to be sent.

For example, an OFDM transmitter uses FFT of N_IFFT=512 points to generate an OFDM signal, and K=32 subcarriers are used to generate OOK signals. First, a to-be-sent OOK waveform is determined. It is assumed that the OOK waveform is "ON|OFF|ON|OFF|OFF|ON|OFF|ON", as shown in (3) in FIG. 4, a waveform of a rectangular square wave. A signal $x = [x_0, x_1, ..., x_{K-1}]$ to be modulated on allocated subcarriers is obtained through pre-operation. When OFDM signal modulation is performed, other subcarriers are used to modulate other to-be-sent data, and the signal $x = [x_0, x_1, ..., x_{K-1}]$ to be modulated is transmitted on the 32 subcarriers allocated for modulating the OOK signal, as shown in (2) in FIG. 4, symbols modulated on the 32 subcarriers. In this way, after IFFT is performed, a frequency signal is converted into a time-domain signal. If 32 subcarriers in the middle are obtained through filtering by using a filter, an amplitude of the signal is close to that of the to-be-sent OOK waveform. For example, the waveform of the square wave around a curve waveform shown in (3) in FIG. 4 is a to-be-sent OOK signal, and the curve waveform shown in (3) in FIG. 4 is a waveform of an OOK signal generated according to the foregoing method. It can be learned that, although there is a specific error fluctuation between a generated signal and an ideal signal, a high-amplitude signal may be formed in an ON part, and a low-amplitude signal may be formed in an OFF part. In this way, the receive end can still correctly demodulate the signal sent by the transmitter.

It should be understood that, in the method shown in FIG. 4, a plurality of OOK signals may be further sent within duration of one OFDM symbol. For example, in the example shown in FIG. 4, eight OOK symbols "ON|OFF|ON|OFF|OFF|ON|OFF|ON" are formed within the duration of the one OFDM symbol.

According to the method shown in FIG. 4, the OOK signal is generated by using an OFDM transmitter. When there are a small quantity of subcarriers used to carry the OOK signal, a frequency response of a radio channel is not flat, frequency selective fading is caused, and deep fading may occur on channels at some frequencies. In this case, it cannot be ensured that transmitted information can be successfully received and demodulated by the receiver.

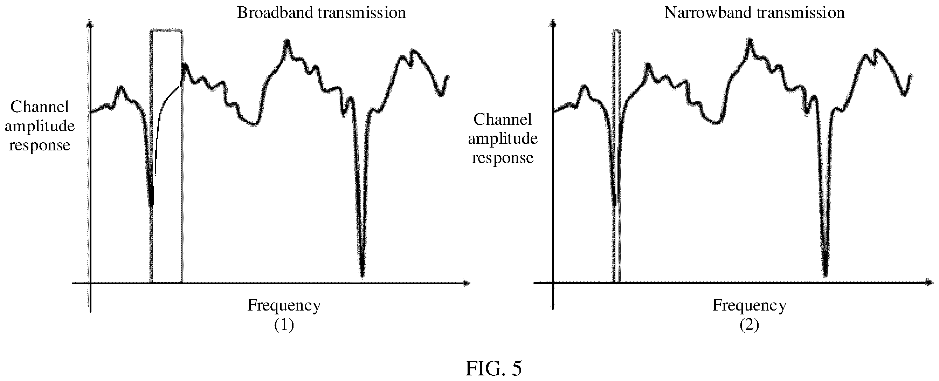

As shown in FIG. 5, the radio channel has different channel amplitude responses at different frequencies. On a frequency band with a high amplitude response, signal attenuation is low, and the receive end can easily perform receiving. However, on a frequency band with a low amplitude response, signal attenuation is high, and it is difficult for the receive end to receive a signal. When there are a large quantity of subcarriers used to carry the OOK signal, a bandwidth for transmitting the signal is wide. A rectangular area shown in (1) in FIG. 5 shows a frequency used by the OOK signal, and the frequency is wide. Even if a channel is in deep fading at some frequencies, if a signal of another frequency can be successfully received, correct demodulation at the receive end is not affected. When there are a small quantity of subcarriers used to carry the OOK signal, a bandwidth for transmitting the signal is narrow. A rectangular area shown in (2) in FIG. 5 shows a frequency used by the OOK signal, and the frequency is narrow. When a channel is in deep fading at some frequencies, it is difficult for the receive end to restore a received signal.

Based on the technical problems existing in the method in FIG. 4, embodiments of this application provide an information processing method and apparatus, so that a receiver can receive a modulated signal with low power consumption, and demodulation performance can be improved.

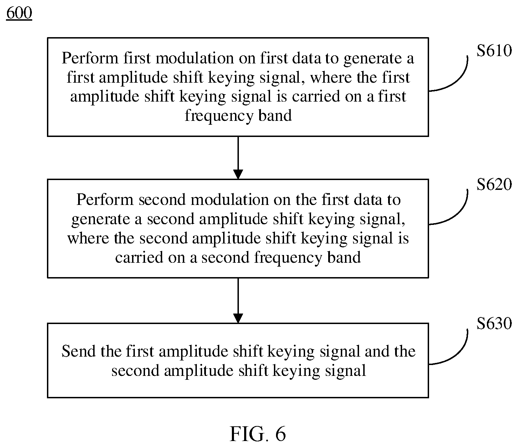

FIG. 6 is a schematic flowchart of an information processing method 600 according to an embodiment of this application.

It should be understood that the method in embodiments of this application may be performed by a network device, or may be performed by a terminal device; or may be performed by a component (for example, a chip or a circuit) of a network device, or may be performed by a component (for example, a chip or a circuit) of a terminal device. This is not limited in this application.

S610: Perform first modulation on first data to generate a first amplitude shift keying signal, where the first amplitude shift keying signal is carried on at least one first frequency band.

The first data includes at least one of the following: to-be-transmitted data, to-be-transmitted information, or a to-be-transmitted signal. The first data may alternatively indicate a signal to be modulated.

The first modulation is used to allocate the first data to the at least one first frequency band for modulation, and a modulated signal is referred to as a first amplitude shift keying signal. That is, the first amplitude shift keying signal is carried on the at least one first frequency band for transmission.

It should be understood that a frequency band used to transmit an amplitude shift keying signal in embodiments of this application may also be referred to as a channel or a sub-band. This is not specifically limited in this application.

S620: Perform second modulation on the first data to generate a second amplitude shift keying signal, where the second amplitude shift keying signal is carried on at least one second frequency band.

The second modulation is performed on the first data to allocate the first data to the at least one second frequency band for modulation, and a modulated signal is referred to as a second amplitude shift keying signal. That is, the second amplitude shift keying signal is carried on the at least one second frequency band for transmission.

It should be understood that the at least one first frequency band and the at least one second frequency band have different frequencies.

In a possible implementation, a frequency spacing between the first frequency band and the second frequency band is greater than or equal to a frequency value of a bandwidth of the first frequency band.

For example, the frequency spacing between the first frequency band and the second frequency band exceeds a frequency value of a coherent bandwidth (coherent bandwidth). The coherent bandwidth indicates a bandwidth with high correlation between frequencies or channels.

If the frequency spacing between the first frequency band and the second frequency band is large, and a corresponding correlation between channels of the first frequency band and the second frequency band is low, it may be considered that the channels of the first frequency band and the second frequency band are independent of each other.

It should be understood that amplitude shift keying modulation symbols corresponding to the first amplitude shift keying signal and the second amplitude shift keying signal may be the same or different. For example, when the first modulation and the second modulation are separately performed on all data in the first data, the determined first amplitude shift keying signal and the determined second amplitude shift keying signal correspond to a same amplitude shift keying modulation symbol. When the first modulation is performed on a first part of data in the first data, the second modulation is performed on a second part of data in the first data, and the first part of data is different from the second part of data, the determined first amplitude shift keying signal and the determined second amplitude shift keying signal correspond to different amplitude shift keying modulation symbols.

S630: Send the first amplitude shift keying signal and the second amplitude shift keying signal.

Specifically, the first amplitude shift keying signal is sent on the first frequency band, and the second amplitude shift keying signal is sent on the second frequency band.

It should be understood that the first amplitude shift keying signal and the second amplitude shift keying signal may be sent in parallel at a same time; or the first amplitude shift keying signal and the second amplitude shift keying signal are not sent at a same time.

According to the method shown in FIG. 6, the amplitude shift keying signals are sent on the at least one first frequency band and the at least one second frequency band, to obtain a large frequency diversity gain and avoid deep fading. In addition, the spacing between the first frequency band and the second frequency band is greater than or equal to the frequency value of the bandwidth of the first frequency band, so that independence between frequency bands is ensured, mutual interference is avoided, and demodulation performance of an OOK signal is improved.

With reference to the method shown in FIG. 6, the following describes in detail the method provided in this application by using an example in which an amplitude shift keying signal is an OOK signal and an execution body is a first device.

According to step S630 in FIG. 6, the first amplitude shift keying signal and the second amplitude shift keying signal are sent.

In a possible implementation, when the first device sends the first amplitude shift keying signal and the second amplitude shift keying signal, the first device sends the first amplitude shift keying signal on a first subcarrier, and sends the second amplitude shift keying signal on a second subcarrier.

The first subcarrier is subcarriers with consecutive frequencies in the first frequency band, and the second subcarrier is subcarriers with consecutive frequencies in the second frequency band.

It should be understood that the first amplitude shift keying signal is sent on the subcarriers with consecutive frequencies in the first frequency band and the second amplitude shift keying signal is sent on the subcarriers with consecutive frequencies in the second frequency band in parallel.

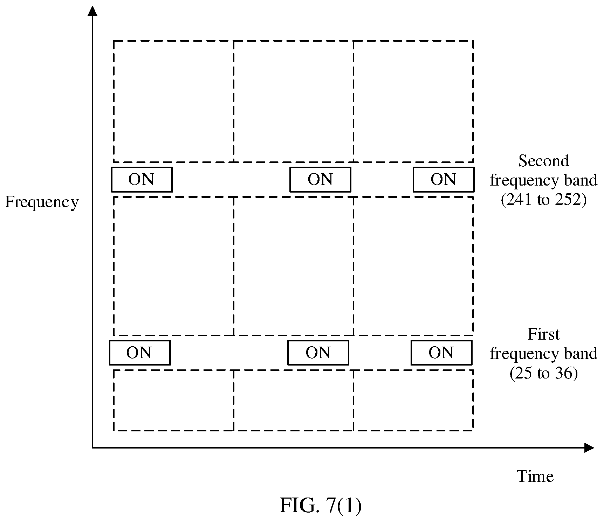

In an example, FIG. 7(1) shows an example in which the first device sends the first amplitude shift keying signal and the second amplitude shift keying signal in parallel. It is assumed that OOK signals are sent by using 24 subcarriers, and the 24 subcarriers are located in the first frequency band and the second frequency band. The first frequency band includes 12 subcarriers (25 to 36), and the second frequency band includes 12 subcarriers (241 to 252). A first OOK signal is sent on the subcarriers 25 to 36, and a second OOK signal is sent on the subcarriers 241 to 252.

It is assumed that the determined first OOK signal and the determined second OOK signal in time domain that are generated by the first device by using frequency-domain signals modulated in the first frequency band and the second frequency band are " ON|OFF|OFF|ON|OFF|ON", and rectangular blocks on the first frequency band and the second frequency band shown in FIG. 7(1) represent OOK modulation symbols "ON" in the OOK signals.

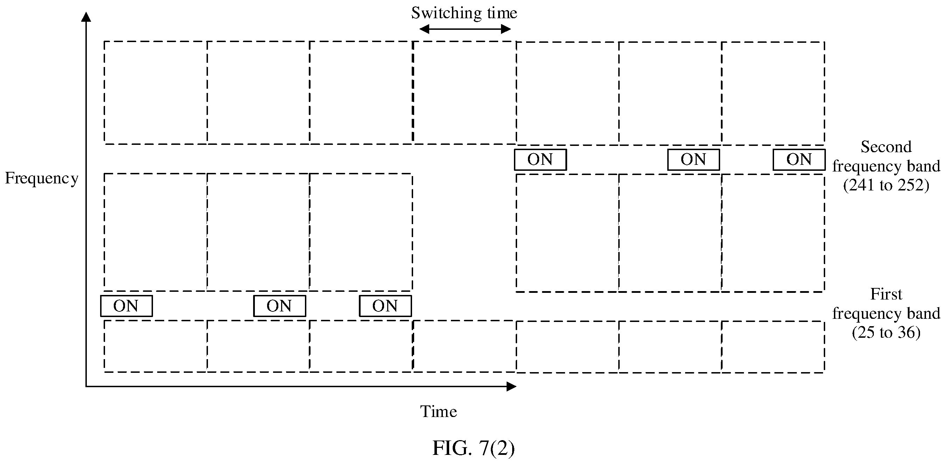

In another example, FIG. 7(2) shows a case in which the first device sends the first amplitude shift keying signal and the second amplitude shift keying signal at different times. That is, the first amplitude shift keying signal and the second amplitude shift keying signal may be sent at different times. For example, after a first OOK signal is sent on the first frequency band, a second OOK signal is sent on the second frequency band. A switching time between the two times of sending may be set, so that a receiver has sufficient time to perform frequency band switching.

It should be understood that the receive end may switch to a first bandpass filter within a time for sending the first amplitude shift keying signal, to obtain a signal on the first frequency band through filtering, and then switch to a second bandpass filter within a time for sending the second amplitude shift keying signal, to obtain a signal on the second frequency band through filtering. A signal with better quality may be selected for demodulation, or two signals may be combined for demodulation.

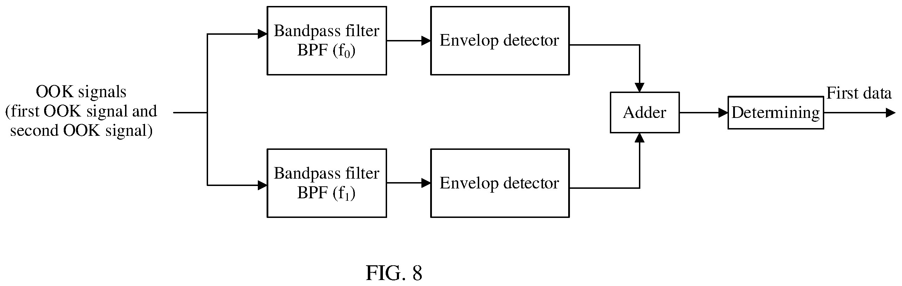

For the examples in FIG. 7(1) and FIG. 7(2), in a receiving process, the receive end uses two bandpass filters to obtain signals on the first frequency band and the second frequency band through filtering, and then combines signals obtained through filtering. As shown in FIG. 8, two bandpass filters BPF ($f_0$) and BPF ($f_1$) are disposed at the receive end, then output results of the two filters may be added and combined by using an add circuit, envelop detection is performed, and OOK demodulation (determining whether an OOK modulation symbol is ON or OFF) is performed, to obtain the first data.

It should be understood that, with reference to the examples in FIG. 7(1) to FIG. 8, the filter BPF ($f_0$) may allow a signal on the first subcarriers 25 to 36 to pass through, and suppress a signal of another frequency. The BPF ($f_1$) may allow a signal on the second subcarriers 241 to 252 to pass through, and suppress a signal of another frequency. After the filters obtain the signals through filtering, the add circuit adds and combines output results of the two filters, performs envelop detection, and performs OOK demodulation (determining whether an OOK modulation symbol is ON or OFF), to obtain the first data "100101".

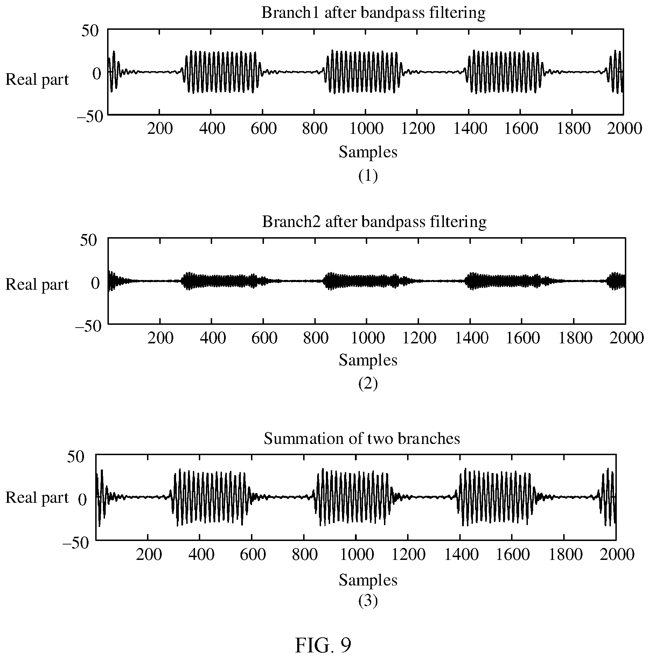

In view of the examples in FIG. 7(1) to FIG. 8, the OOK signals are sent on the first frequency band and the second frequency band. After the OOK signals pass through radio channels, the receive end receives the OOK signals by using the two bandpass filters. A signal waveform obtained after the first bandpass filter obtains the first subcarriers (25 to 36) through filtering is shown in (1) in FIG. 9, and a signal waveform obtained after the second bandpass filter obtains the second subcarriers (241 to 252) through filtering is shown in (2) in FIG. 9. It can be learned from (1) and (2) in FIG. 9 that an amplitude of a signal obtained by the first bandpass filter is significantly greater than an amplitude of a signal obtained by the second bandpass filter. In this case, channel quality on the first subcarrier is good, and a channel amplitude response on the first subcarrier is higher than that on the second subcarrier. The receive end further adds the two signals by using an adder, to obtain a signal waveform shown in (3) in FIG. 9.

It can be learned that, although the second subcarriers corresponding to the second frequency band may be in deep fading, and consequently, quality of a signal received by the receive end is poor, because quality of a signal transmitted on the first frequency band is good, the receive end can still obtain good receiving quality after addition, and can correctly demodulate the first data sent by the transmit end.

FIG. 7(1) to FIG. 9 are merely examples. Through transmission of two OOK signals on two frequency bands, a person skilled in the art may further modulate the first data for sending on consecutive subcarriers in at least two (for example, three, four, or more) frequency bands with different frequencies. In this way, a good frequency diversity gain can be obtained, impact of deep fading on performance can be reduced to some extent, and demodulation performance can be improved.

In another possible implementation, when the first device sends the first OOK signal and the second OOK signal in parallel, the first device sends the first OOK signal on the first subcarriers, and sends the second OOK signal on the second subcarriers.

The first subcarriers are inconsecutive subcarriers that are in the first frequency band and whose frequency spacing is a first value, the second subcarriers are inconsecutive subcarriers that are in the second frequency band and whose frequency spacing is a second value, and the first value and the second value are positive integers greater than or equal to 1.

It should be understood that the first device sends the first OOK signal on subcarriers with inconsecutive frequencies in the first frequency band and sends the second OOK signal on subcarriers with inconsecutive frequencies in the second frequency band in parallel.

In an example, in view of the example in FIG. 7(1) and FIG. 7(2), the first OOK signal is transmitted on the first subcarriers corresponding to the first frequency band. The first subcarriers may be odd-numbered subcarriers, for example, 25, 27, 29, 31, 33, and 35, and the first OOK signal is transmitted on the odd-numbered subcarriers 25, 27, 29, 31, 33, and 35. Alternatively, the first subcarriers may be even-numbered subcarriers 26, 28, 30, 32, 34, and 36, and the first OOK signal is transmitted on the even-numbered subcarriers 26, 28, 30, 32, 34, and 36.

In another example, in view of the example in FIG. 7(1) and FIG. 7(2), the second OOK signal is transmitted on the second subcarriers corresponding to the second frequency band. The second subcarriers may be odd-numbered subcarriers, for example, 241, 243, 245, 247, 249, and 251, and the second OOK signal is transmitted on the odd-numbered subcarriers 241, 243, 245, 247, 249, and 251. Alternatively, the second subcarriers may be even-numbered subcarriers, for example, 242, 244, 246, 248, 250, and 252, and the second OOK signal is transmitted on the even-numbered subcarriers 242, 244, 246, 248, 250, and 252.

It should be understood that the first value and the second value are positive integers greater than or equal to 1, and a subcarrier spacing may alternatively be another value (for example, 2 or 3). The foregoing example is merely for ease of understanding of the method shown in this application, and does not constitute any limitation on this application.

According to the foregoing example, OOK signals are transmitted on inconsecutive subcarriers on at least two frequency bands, so that a larger frequency diversity gain can be obtained, deep fading can be avoided, and an OOK signal with a low peak-to-average ratio can be generated.

In still another possible implementation, when the first device sends the first OOK signal and the second OOK signal in parallel, the first device determines, in a first time period based on the first data, to transmit a modulation symbol ON in the OOK signal on a third frequency band and transmit a modulation symbol OFF in the OOK signal on a fourth frequency band.

The third frequency band is one of the at least one first frequency band and the at least one second frequency band, and the fourth frequency band is all frequency bands in the at least one first frequency band and the at least one second frequency band other than the third frequency band.

For example, when there is one first frequency band and one second frequency band, the third frequency band is the first frequency band or the second frequency band, and the fourth frequency band is all frequency bands other than the third frequency band. When there are a plurality of first frequency bands and a plurality of second frequency bands, the third frequency band is one of the plurality of frequency bands, and the fourth frequency band is all frequency bands other than the third frequency band.

It should be understood that, in a same time period, in the frequency bands for transmitting the OOK signal, only one frequency band is used to transmit the modulation symbol ON in the OOK signal, and all remaining frequency bands are used to transmit OFF in the OOK signal in a same time period. In this technical solution, information is transmitted based on a frequency band modulation symbol ON. Therefore, this technical solution may also be considered as frequency shift keying (frequency shift keying, FSK).

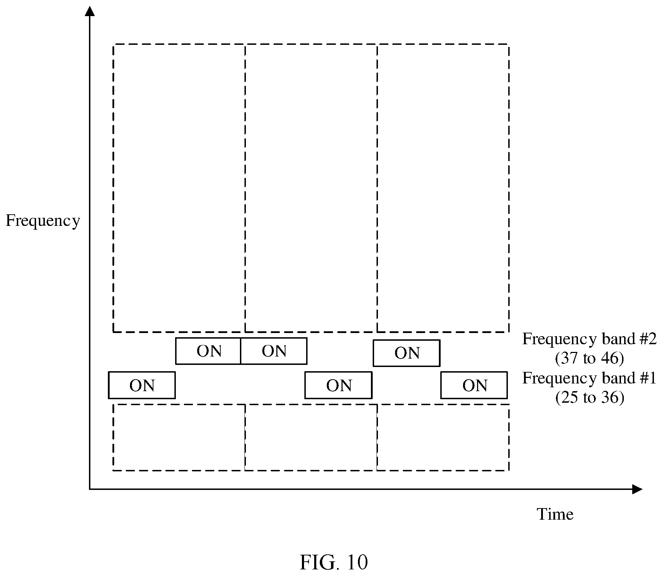

In an example, as shown in FIG. 10, if an information bit in the first data is "0", an OOK symbol "ON" is sent on a frequency band #1, and an OOK symbol "OFF" is sent on a frequency band #2. If the information bit in the first data is "1", the OOK symbol "OFF" is sent on the frequency band #1, and the OOK symbol "ON" is sent on the frequency band #2. It is assumed that the transmitted OOK signal is "OFF|ON|ON|OFF|ON|OFF". The first frequency band is the frequency band #1 (subcarriers are 25 to 36), and the second frequency band is the frequency band #2 (subcarriers are 37 to 46). As shown in FIG. 10, in a same time period, the frequency band #1 is used to transmit the modulation symbol "ON" in the OOK signal, and the frequency band #2 is used to transmit the modulation symbol "OFF" in the OOK signal. When the symbol "ON" in the OOK signal is transmitted, the frequency band #1 is used to transmit "ON", and the remaining frequency band #2 is used to transmit "OFF". When the symbol "OFF" in the OOK signal is transmitted, the frequency band #2 is used to transmit "ON", and the remaining frequency band #1 is used to transmit "OFF".

It should be understood that the subcarriers (35 and 36) in the frequency band #1 and the frequency band #2 is not used, and may be used as a guard interval. Certainly, the guard interval between the frequency band #1 and the frequency band #2 may alternatively be the frequency value of the bandwidth of the first frequency band (for example, the frequency value of the coherent bandwidth) in FIG. 7(1) and FIG. 7(2).

It should be further understood that, in a same time period, only one frequency band is used to transmit the modulation symbol "ON" in the OOK signal, that is, there is one frequency band #1, and all remaining frequency bands are used to transmit the modulation symbol "OFF" in the OOK signal, that is, there are one or more frequency bands #2. This is not limited.

It should be further understood that, when the information bit is "0", the frequency band #1 is used to transmit "ON", and when the information bit is "1", the frequency band #2 is used to transmit "ON". Alternatively, when the information bit is "1", the frequency band #1 is used to transmit "ON", and when the information bit is "0", the frequency band #2 is used to transmit "ON". This may be preset by a system, or may be agreed on by the transmit end and the receive end. This is not specifically limited in this application.

For the example in FIG. 10, in a receiving process, the receive end needs to separately obtain, through filtering by using bandpass filters, OOK signals transmitted on different frequency bands. A quantity of bandpass filters corresponds to a quantity of frequency bands for sending the OOK signals. In view of the example in FIG. 10, the receive end may separately obtain, through filtering by using two bandpass filters, signals on the frequency band #1 and the frequency band #2, then determine a frequency band with a larger energy value through comparison by using a comparator, and perform demodulation, to obtain the first data "011010".

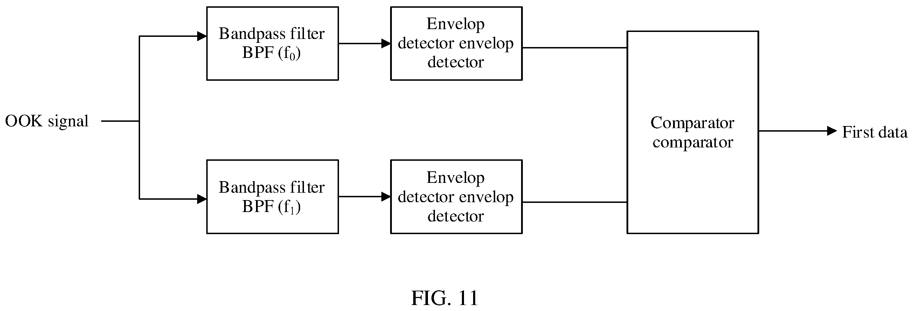

It should be understood that, to demodulate OOK signals that are simultaneously transmitted on two paths (the frequency band #1 and the frequency band #2), the two bandpass filters BPF (f0) and BPF (f1) may be used at the receive end. As shown in FIG. 11, the two filters are respectively aligned with two OOK channels, the BPF (f0) may obtain, through filtering, an OOK signal transmitted on the subcarriers 25 to 34 in the frequency band #1, and the BPF (f1) may obtain, through filtering, an OOK signal transmitted on the subcarriers 37 to 46 in the frequency band #2. Then, through envelop detection, the receive end may determine an OOK signal with higher energy. A comparison circuit is used. If energy on the frequency band #1 is higher, it is determined that the received information bit is '0'. If energy on the frequency band #2 is higher, it is determined that the received information bit is '1'. Finally, the first data "011010" is obtained.

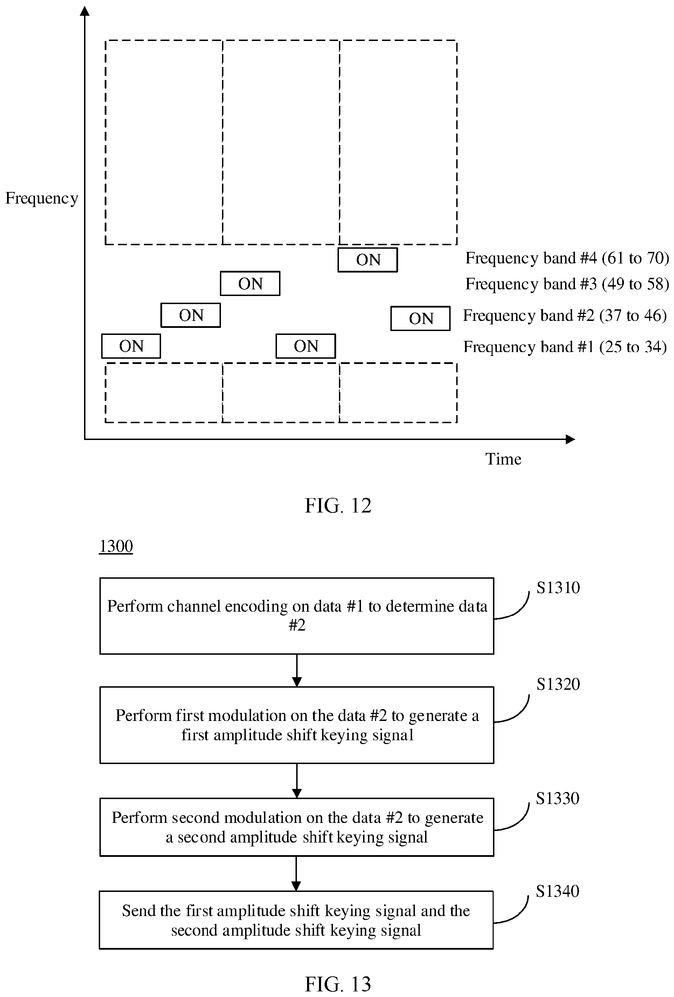

In another example, as shown in FIG. 12, assuming that the information bit in the first data is "00", the OOK symbol "ON" is sent on the frequency band #1, and "OFF" is sent on other frequency bands (the frequency band #2, a frequency band #3, and a frequency band #4). Assuming that the information bit in the first data is "01", the OOK symbol "ON" is sent on the frequency band #2, and "OFF" is sent on other frequency bands (the frequency band #1, the frequency band #3, and the frequency band #4). Assuming that the information bit in the first data is "10", the OOK symbol "ON" is sent on the frequency band #3, and "OFF" is sent on other frequency bands (the frequency band #1, the frequency band #2, and the frequency band #4). Assuming that the information bit in the first data is "11", the OOK symbol "ON" is sent on the frequency band #4, and "OFF" is sent on other frequency bands (the frequency band #1, the frequency band #2, and the frequency band #3).

A subcarrier range of the frequency band #1 is 25 to 34, a subcarrier range of the frequency band #2 is 37 to 46, a subcarrier range of the frequency band #3 is 49 to 58, and a subcarrier range of the frequency band #4 is 61 to 70.

As shown in FIG. 12, in a same time period, "ON" in the OOK signal is transmitted on only one of the frequency band #1, the frequency band #2, the frequency band #3, and the frequency band #4, and "OFF" in the OOK signal is transmitted on all the other frequency bands.

For the example in FIG. 12, in a receiving process, the receive end needs to separately obtain, through filtering by using bandpass filters, OOK signals transmitted on different frequency bands. Then, a frequency band with a larger energy value is determined through comparison by the comparator, and demodulation is performed to obtain the first data "000110001101".

It should be understood that, to demodulate OOK signals that are simultaneously transmitted on four paths (the frequency band #1, the frequency band #2, the frequency band #3, and the frequency band #4), four bandpass filters may be used at the receive end to respectively align four OOK channels, so that OOK signals transmitted on subcarriers in the four frequency bands can be obtained through filtering. Then, through envelop detection, the receive end may determine an OOK signal with higher energy. Demodulation is performed by using the comparison circuit, to finally obtain the first data "000110001101".

It should be further understood that the example in FIG. 12 is a direct extension of the examples in FIG. 10 and FIG. 11. Four frequency bands are used to transmit 2 bits per symbol, to further improve a transmission rate.

It should be noted that, in the foregoing examples in FIG. 10 to FIG. 12, when the OOK signal is transmitted on a same frequency band, the OOK signal may be transmitted on consecutive subcarriers, or may be transmitted on inconsecutive subcarriers. This is not limited in this application.

According to the foregoing examples, the OOK signals are transmitted on at least two frequency bands, and in a same time period, only one frequency band is used to transmit the OOK modulation symbol "ON", and a remaining frequency band is used to transmit the OOK modulation symbol "OFF". This reduces a symbol rate of OOK and improves a transmission rate. The receive end performs determining by using a simple comparison circuit, so that low complexity and low power consumption of the receive end can still be maintained.

According to the foregoing descriptions of the examples in FIG. 7(1) to FIG. 12, the first device sends the OOK signals on the at least two frequency bands, where a frequency band spacing between the at least two frequency bands is greater than or equal to the frequency value of the bandwidth of the first frequency band, to ensure independence between frequency bands, avoid mutual interference, improve a frequency diversity gain, and avoid deep fading. In addition, when the OOK signals are transmitted on a same frequency band, the OOK signals may be transmitted on consecutive subcarriers on the frequency band, or the OOK signals may be transmitted on inconsecutive subcarriers on the frequency band, so that an OOK signal with a low peak to average power ratio can be generated. When the OOK signals are transmitted on the at least two frequency bands, in a same time period, only one frequency band is used to transmit "ON" in the OOK signal, and a remaining frequency band is used to transmit "OFF", so that a transmission rate is improved, and the receive end can still maintain low complexity and low power consumption.

FIG. 13 is a schematic flowchart of an information processing method 1300 according to an embodiment of this application. As shown in FIG. 13, the method includes the following steps.

S1310: Perform channel encoding on data #1 to obtain data #2.

The channel encoding is first performed on the data #1 to obtain the data #2. The data #1 is data to be transmitted on a frequency band.

It should be understood that the channel encoding means that some check bits are inserted after an encoding operation is performed on sent data (or referred to as information). In this way, a receiver may determine, based on a received information bit and a received check bit, whether a received signal is correct, and correct, to some extent, a bit that is incorrectly demodulated.

In an example, the channel encoding may include at least one of the following: a polar code, a BCH code, repetition encoding, or Manchester encoding.

S1320: Perform first modulation on a first part of the data #2 to generate a first amplitude shift keying signal.

It should be understood that, after the data #2 is determined by performing the channel encoding on the data #1, the first modulation is performed on the first part of the data #2 to generate the first amplitude shift keying signal.

S1330: Perform second modulation on a second part of the data #2 to generate a second amplitude shift keying signal.

It should be understood that the data #2 includes the first part and the second part. The second part may be a remaining part of the data #2 other than the first part, or the second part may be a part of the remaining part of the data #2 other than the first part. This is not specifically limited in this application.

S1340: Send the first amplitude shift keying signal and the second amplitude shift keying signal.

It should be understood that, after the first modulation and the second modulation are respectively performed on the first part and the second part of the data #2, the first amplitude shift keying signal and the second amplitude shift keying signal are obtained, and the first amplitude shift keying signal and the second amplitude shift keying signal are simultaneously sent.

The first amplitude shift keying signal is carried on at least one first frequency band for sending, the second amplitude shift keying signal is carried on at least one second frequency band for sending, and the first frequency band and the second frequency band have different frequencies.

The first amplitude shift keying signal includes at least two amplitude shift keying modulation symbols, and when the first amplitude shift keying signal is carried on at least two first frequency bands, the at least two amplitude shift keying modulation symbols are respectively carried on the at least two first frequency bands.

For the method in FIG. 13, two bandpass filters may be used at a receive end to obtain, through filtering, amplitude shift keying symbols in the first frequency band and the second frequency band, separately perform amplitude shift keying demodulation, re-alternate or combine bit strings obtained through demodulation, to obtain a bit sequence, and perform decoding by using a decoder. If the receive end performs amplitude shift keying demodulation, and determines that a quantity of decoding errors is within an error correction capability of the decoder, the decoder may restore a sent bit sequence.

According to the method shown in FIG. 13, because encoded data (the data #2) is sent on at least two different frequency bands, a specific frequency diversity gain can be obtained. If quality of one frequency band is poor and a large quantity of errors occur, and quality of another frequency band is good and no error occurs, a probability that incorrect transmission can be corrected through channel decoding is high, that is, demodulation performance is improved.

With reference to the method shown in FIG. 13, the following describes in detail the method provided in this application by using an example in which an amplitude shift keying signal is an OOK signal and an execution body is a first device.

In an example, it is assumed that the data #1 is '10011110'. The channel encoding is first performed, and a bit sequence obtained through the encoding is "100111100111", where the first eight bits (10011110) are information bits of the data #1, and the last four bits (0111) are check bits. Specifically, the first device modulates the data #2 according to an OOK modulation method. To be specific, a bit 0 is mapped to a modulation symbol "OFF" in the OOK signal, a bit 1 is mapped to a modulation symbol "ON" in the OOK signal, and the modulation symbol "OFF" and the modulation symbol "ON" are sent on at least two frequency bands.

For example, OOK modulation symbols "ON| OFF|OFF|ON|ON|ON|ON|OFF|OFF|ON|ON|ON" in a modulated OOK signal #1 are sent on two frequency bands.

OOK modulation symbols of the OOK signal #1 may be alternately sent on a frequency band #1 and a frequency band #2. For example, a signal that may be sent on the frequency band #1 is " ON|OFF|ON|ON|OFF| ON", and a signal that may be sent on the frequency band #2 is " OFF|ON|ON|OFF|ON|ON".

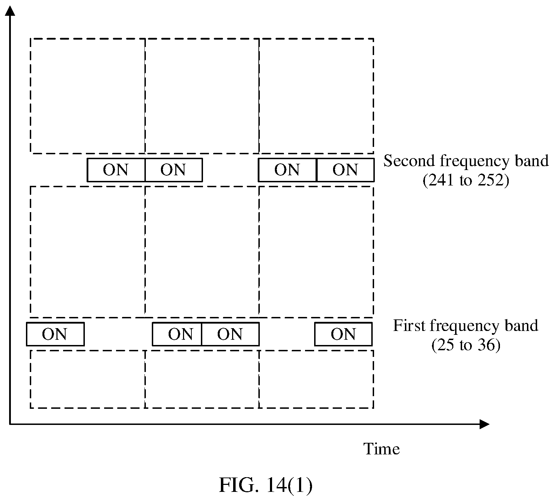

It should be understood that the first amplitude shift keying signal and the second amplitude shift keying signal may be sent in parallel. In the example shown in FIG. 14(1), OOK modulation symbols "ON|OFF|ON|ON| OFF|ON" are sent on the frequency band #1 and OOK modulation symbols "OFF|ON|ON|OFF|ON|ON" are sent on the frequency band #2 in parallel.

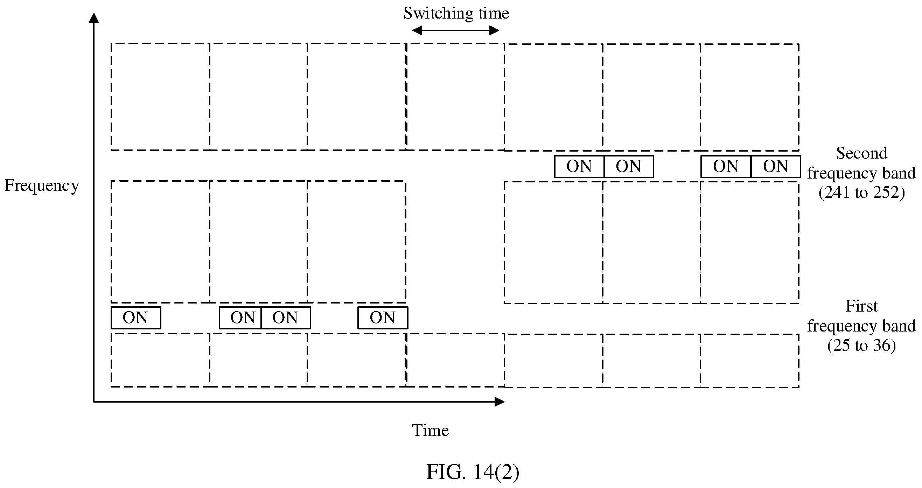

It should be further understood that the first amplitude shift keying signal and the second amplitude shift keying signal may alternatively be sent at different times. For example, in the example shown in FIG. 14(2), after the OOK modulation symbols "ON|OFF|ON|ON| OFF|ON" are sent on the frequency band #1, the OOK modulation symbols "OFF|ON|ON|OFF|ON|ON" are sent on the frequency band #2. A switching time between the two times of sending may be set, so that a receiver has sufficient time to perform frequency band switching.

The first six OOK modulation symbols of an OOK signal #1 may further be sent on the frequency band #1, and the last six OOK modulation symbols are sent on the frequency band #2. For example, a signal sent on the frequency band #1 is " ON|OFF|OFF|ON|ON| ON", and a signal sent on the frequency band #2 is " ON| OFF|OFF|ON|ON|ON".

Certainly, the signal "ON|OFF|OFF|ON|ON| ON" sent on the frequency band #1 and the signal "ON|OFF|OFF|ON|ON|ON" sent on the frequency band #2 may be simultaneously sent, or may be sent at different times. For details, refer to the foregoing example. Details are not described herein again. When the OOK signal #1 is carried on at least two first frequency bands, the OOK signal #1 includes at least two OOK modulation symbols, and the at least two OOK modulation symbols are respectively carried on the at least two first frequency bands.

For example, when the OOK signal #1 includes " ON|OFF|OFF|ON|ON|ON", the OOK modulation symbols "ON|OFF|OFF" may be carried on the frequency band #1 for sending, the OOK modulation symbols "ON| ON" may be carried on the frequency band #2 for sending, and the OOK modulation symbol "ON" may be carried on a frequency band #3 for sending. The frequency band #1, the frequency band #2, and the frequency band #3 all are first frequency bands.

It should be understood that modulated OOK modulation symbols may alternatively be sent on three, four, or more frequency bands according to a specific rule. This is not specifically limited in this application.

According to the foregoing methods in FIG. 13 to FIG. 14(2), the second amplitude shift keying modulation signal may alternatively be carried on at least two frequency bands for transmission, which is similar to a transmission manner of the first amplitude shift keying modulation signal. In other words, modulation keying symbols in the second amplitude shift keying modulation signal may be carried on the at least two frequency bands. Details are not described herein again. When the second amplitude modulation signal is carried on one frequency band for transmission, the second amplitude shift keying modulation signal and the first amplitude shift keying modulation signal may be sent in parallel, or may not be sent at the same time.

It may be understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in the embodiments may be mutually referenced or explained in the embodiments. This is not limited.

It may be further understood that in the foregoing method embodiments, the method and the operation implemented by the terminal device may also be implemented by a component (for example, a chip or a circuit) of the terminal device. In addition, the method and the operation implemented by a network device may also be implemented by a component (for example, a chip or a circuit) of the network device. This is not limited.

Corresponding to the methods provided in the foregoing method embodiments, an embodiment of this application further provides a corresponding apparatus. The apparatus includes a corresponding module configured to perform the foregoing method embodiments. The modules may be software, hardware, or a combination of software and hardware. It may be understood that the technical features described in the method embodiments are also applicable to the following apparatus embodiments.

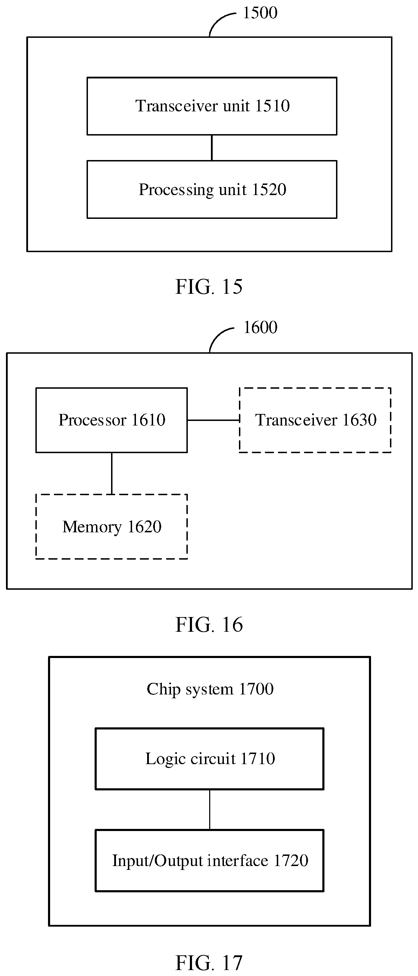

For example, FIG. 15 is a diagram of a communication apparatus 1500 according to an embodiment of this application. The apparatus 1500 includes a transceiver unit 1510 and a processing unit 1520. The transceiver unit 1510 may be configured to implement a corresponding communication function. The transceiver unit 1510 may alternatively be referred to as a communication interface or a communication unit. The processing unit 1520 may be configured to perform data or information processing.

Optionally, the apparatus 1500 further includes a storage unit. The storage unit may be configured to store instructions and/or data. The processing unit 1520 may read the instructions and/or the data in the storage unit, so that the apparatus implements the foregoing method embodiments.

In a possible design, the apparatus 1500 may be configured to perform actions performed by the first device in the foregoing method embodiments. In this case, the apparatus 1500 may be a terminal device or a network device, or may be a component of a terminal device or a network device. The transceiver unit 1510 is configured to perform a receiving/sending-related operation of the first device in the foregoing method embodiments, and the processing unit 1520 is configured to perform a processing-related operation of the first device in the foregoing method embodiments.

For example, the processing unit 1520 is configured to perform first modulation on first data to generate a first amplitude shift keying signal, where the first amplitude shift keying signal is carried on at least one first frequency band. The processing unit 1520 is further configured to perform second modulation on the first data to generate a second amplitude shift keying signal, where the second amplitude shift keying signal is carried on at least one second frequency band, and the second frequency band and the first frequency band have different frequencies. The transceiver unit 1510 is configured to send the first amplitude shift keying signal and the second amplitude shift keying signal.

The apparatus 1500 may implement the steps or procedures performed by the network device in the method embodiments according to embodiments of this application. The apparatus 1500 may include units configured to perform the methods performed by the network device in the method embodiments according to embodiments of this application. A specific process in which the units perform the foregoing corresponding steps is described in detail in the foregoing method embodiments. For brevity, details are not described herein again.

It should be understood that the apparatus 1500 herein is embodied in a form of functional unit. The term "unit" herein may be an application-specific integrated circuit (application-specific integrated circuit, ASIC), an electronic circuit, a processor (for example, a shared processor, a dedicated processor, or a group processor) configured to execute at least one software or firmware program and a memory, a combined logic circuit, and/or another suitable component that supports the described functions. In an optional example, a person skilled in the art may understand that the apparatus 1500 may be specifically the terminal device in the foregoing embodiments, and may be configured to perform the procedures and/or the steps corresponding to the terminal device in the foregoing method embodiments; or the apparatus 1500 may be specifically the network device in the foregoing embodiments, and may be configured to perform the procedures and/or the steps corresponding to the network device in the foregoing method embodiments. To avoid repetition, details are not described herein again.

The apparatus 1500 in each of the foregoing solutions has functions of implementing corresponding steps performed by the communication device (for example, the terminal device or the network device) in the foregoing methods. The function may be implemented by hardware, or may be implemented by hardware executing corresponding software. The hardware or the software includes at least one module corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit like the processing unit may be replaced with a processor, respectively performing receiving and sending operations and a related processing operation in each method embodiment.

In addition, the transceiver unit 1510 may alternatively be a transceiver circuit (for example, may include a receiving circuit and a sending circuit), and the processing unit may be a processing circuit.

It should be noted that the apparatus in FIG. 15 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

For example, FIG. 16 is a diagram of another communication apparatus 1600 according to an embodiment of this application. The apparatus 1600 includes a processor 1610, and the processor 1610 is coupled to a memory 1620. Optionally, the apparatus 1600 further includes the memory 1620. The memory 1620 is configured to store a computer program or instructions and/or data. The processor 1610 is configured to execute the computer program or the instructions stored in the memory 1620, or read the data stored in the memory 1620, to perform the methods in the foregoing method embodiments.

Optionally, there is at least one processor 1610.

Optionally, there is at least one memory 1620.

Optionally, the memory 1620 and the processor 1610 are integrated together or disposed separately.

Optionally, as shown in FIG. 16, the apparatus 1600 may further include a transceiver 1630, and the transceiver 1630 is configured to receive and/or send a signal. For example, the processor 1610 is configured to control the transceiver 1630 to receive and/or send the signal.

In a solution, the apparatus 1600 is configured to implement operations performed by the terminal device in the foregoing method embodiments.

For example, the processor 1610 is configured to execute the computer program or the instructions stored in the memory 1620, to implement related operations of the terminal device in the foregoing method embodiments, for example, the method performed by the terminal device in the embodiment shown in FIG. 6.

In another solution, the apparatus 1600 is configured to implement operations performed by the network device in the foregoing method embodiments.

For example, the processor 1610 is configured to execute the computer program or the instructions stored in the memory 1620, to implement related operations of the network device in the foregoing method embodiments, for example, the method performed by the network device in the embodiment shown in FIG. 6.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes the following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

For example, FIG. 17 is a diagram of a chip system 1700 according to an embodiment of this application. The chip system 1700 (or may alternatively be referred to as a processing system) includes a logic circuit 1710 and an input/output interface (input/output interface) 1720.

The logic circuit 1710 may be a processing circuit in the chip system 1700. The logic circuit 1710 may be coupled to and connected to a storage unit, and invoke instructions in the storage unit, to enable the chip system 1700 to implement the methods and functions in embodiments of this application. The input/output interface 1720 may be an input/output circuit in the chip system 1700, and outputs information processed by the chip system 1700, or inputs to-be-processed data or signaling information into the chip system 1700 for processing.

Specifically, for example, if the chip system 1700 is installed in a terminal device, the logic circuit 1710 is coupled to the input/output interface 1720, and the input/output interface 1720 may input a wake-up signal to the logic circuit 1710 for processing.

In a solution, the chip system 1700 is configured to implement operations performed by the first device in the foregoing method embodiments.

For example, the logic circuit 1710 is configured to implement processing-related operations performed by the first device in the foregoing method embodiments, and the input/output interface 1720 is configured to implement sending- and/or receiving-related operations performed by the first device in the foregoing method embodiments.

An embodiment of this application further provides a computer-readable storage medium. The computer-readable storage medium stores computer instructions for implementing the methods performed by a device in the foregoing method embodiments.

For example, when the computer program is executed by a computer, the computer is enabled to implement the method performed by the terminal device in the foregoing method embodiments.

For another example, when the computer program is executed by a computer, the computer is enabled to implement the method performed by the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system. The communication system includes the terminal device and the network device in the foregoing embodiments.

For explanations and beneficial effects of related content in any one of the apparatuses provided above, refer to the corresponding method embodiment provided above. Details are not described herein again.

In the several embodiments provided in this application, it should be understood that the disclosed apparatuses and methods may be implemented in other manners. For example, the described apparatus embodiment is merely an example. For example, division into the units is merely logical function division and may be other division in actual implementation. For example, at least two units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or some of embodiments may be implemented in a form of computer program product. The computer program product includes at least one computer instruction. When the computer program instructions are loaded and executed on the computer, the procedures or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, for example, a server or a data center, integrating at least one usable medium. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information processing method, comprising:

   performing first modulation on first data to generate a first amplitude shift keying signal, wherein the first amplitude shift keying signal is carried on at least one first frequency band;
   performing second modulation on the first data to generate a second amplitude shift keying signal, wherein the second amplitude shift keying signal is carried on at least one second frequency band, and the at least one second frequency band and the at least one first frequency band have different frequencies; and
   sending the first amplitude shift keying signal and the second amplitude shift keying signal.

2. The method according to claim 1, wherein the first amplitude shift keying signal and the second amplitude shift keying signal correspond to a same amplitude shift keying modulation symbol.

3. The method according to claim 1 or 2, wherein the sending the first amplitude shift keying signal and the second amplitude shift keying signal comprises:

   sending the first amplitude shift keying signal on a first subcarrier, and sending the second amplitude shift keying signal on a second subcarrier, wherein
   the first subcarrier is subcarriers with consecutive frequencies in the first frequency band, and the second subcarrier is subcarriers with consecutive frequencies in the second frequency band.

4. The method according to claim 1 or 2, wherein the sending the first amplitude shift keying signal and the second amplitude shift keying signal comprises:

    sending the first amplitude shift keying signal on a first subcarrier, and sending the second amplitude shift keying signal on a second subcarrier, wherein
    the first subcarriers are inconsecutive subcarriers that are in the first frequency band and whose frequency band spacing is a first value, the second subcarriers are inconsecutive subcarriers that are in the second frequency band and whose frequency band spacing is a second value, and the first value and the second value are positive integers greater than or equal to 1.

5. The method according to any one of claims 1 to 4, wherein that the first frequency band and the second frequency band have different frequencies comprises:
    a frequency spacing between the first frequency band and the second frequency band is a frequency value greater than or equal to a bandwidth of the first frequency band.

6. The method according to any one of claims 1 to 5, wherein the sending the first amplitude shift keying signal and the second amplitude shift keying signal comprises:
    determining, in a first time period based on the first data, to transmit a modulation symbol ON in an amplitude shift keying signal on a third frequency band and transmit a modulation symbol OFF in an amplitude shift keying signal on the fourth frequency band, wherein the third frequency band is one of the at least one first frequency band and the at least one second frequency band, and the fourth frequency band is all frequency bands in the at least one first frequency band and the at least one second frequency band other than the third frequency band.

7. The method according to claim 1 or 2, wherein the performing first modulation on first data to generate the first amplitude shift keying signal, wherein the first amplitude shift keying signal is carried on the first frequency band comprises:

    performing channel encoding on the first data to determine second data;
    performing the first modulation on a first part of the second data to generate the first amplitude shift keying signal; and

performing the second modulation on a second part of the second data to generate the second amplitude shift keying signal, wherein the second data comprises the first part and the second part, wherein
when the first amplitude shift keying signal is carried on at least two first frequency bands, the first amplitude shift keying signal comprises at least two amplitude shift keying modulation symbols, and the at least two amplitude shift keying modulation symbols are respectively carried on the at least two first frequency bands.

8. An information processing apparatus, wherein the apparatus comprises:

    a processing unit, configured to perform first modulation on first data to generate a first amplitude shift keying signal, wherein the first amplitude shift keying signal is carried on at least one first frequency band, wherein
    the processing unit is further configured to perform second modulation on the first data to generate a second amplitude shift keying signal, wherein the second amplitude shift keying signal is carried on at least one second frequency band, and the at least one second frequency band and the at least one first frequency band have different frequencies; and
    a transceiver unit, configured to send the first amplitude shift keying signal and the second amplitude shift keying signal.

9. The apparatus according to claim 8, wherein the first amplitude shift keying signal and the second amplitude shift keying signal correspond to a same amplitude shift keying modulation symbol.

10. The apparatus according to claim 8 or 9, wherein that the transceiver unit is configured to send the first amplitude shift keying signal and the second amplitude shift keying signal comprises:

    sending the first amplitude shift keying signal on a first subcarrier, and sending the second amplitude shift keying signal on a second subcarrier, wherein
    the first subcarrier is subcarriers with consecutive frequencies in the first frequency band, and the second subcarrier is subcarriers with consecutive frequencies in the second frequency band.

11. The apparatus according to claim 8 or 9, wherein that the transceiver unit is configured to send the first amplitude shift keying signal and the second amplitude shift keying signal comprises:

sending the first amplitude shift keying signal on a first subcarrier, and sending the second amplitude shift keying signal on a second subcarrier, wherein

the first subcarriers are inconsecutive subcarriers that are in the first frequency band and whose frequency band spacing is a first value, the second subcarriers are inconsecutive subcarriers that are in the second frequency band and whose frequency band spacing is a second value, and the first value and the second value are positive integers greater than or equal to 1.

12. The apparatus according to any one of claims 8 to 11, wherein that the first frequency band and the second frequency band have different frequencies comprises:

a frequency spacing between the first frequency band and the second frequency band is a frequency value greater than or equal to a bandwidth of the first frequency band.

13. The apparatus according to any one of claims 8 to 12, wherein that the transceiver unit is configured to send the first amplitude shift keying signal and the second amplitude shift keying signal comprises:

in a first time period, the transceiver unit is further configured to determine, based on the first data, to transmit a modulation symbol ON in an amplitude shift keying signal on a third frequency band and transmit a modulation symbol OFF in an amplitude shift keying signal on the fourth frequency band, wherein the third frequency band is one of the at least one first frequency band and the at least one second frequency band, and the fourth frequency band is all frequency bands in the at least one first frequency band and the at least one second frequency band other than the third frequency band.

14. The apparatus according to claim 8 or 9, wherein that the processing unit is configured to perform first modulation on first data to generate the first amplitude shift keying signal, wherein the first amplitude shift keying signal is carried on the first frequency band comprises:

the processing unit is further configured to perform channel encoding on the first data to determine second data;
the processing unit is further configured to perform the first modulation on a first part of the second data to generate the first amplitude shift keying signal; and
the processing unit is further configured to perform the second modulation on a second part of the second data to generate the second amplitude shift keying signal, wherein the second data comprises the first part and the second part, wherein
when the first amplitude shift keying signal is carried on at least two first frequency bands, the first amplitude shift keying signal comprises at least two amplitude shift keying modulation symbols, and the at least two amplitude shift keying modulation symbols are respectively carried on the at least two first frequency bands.

15. A communication apparatus, comprising a processor, wherein the processor is configured to execute a computer program or instructions stored in a memory, so that the apparatus performs the method according to any one of claims 1 to 7.

16. The apparatus according to claim 15, wherein the apparatus further comprises the memory and/or a communication interface, and the communication interface is coupled to the processor; and
the communication interface is configured to input and/or output information.

17. A computer-readable storage medium, wherein the computer-readable storage medium stores a computer program or instructions; and when the computer program or the instructions are run on a communication apparatus, the communication apparatus is enabled to perform the method according to any one of claims 1 to 7.

18. A computer program product, wherein the computer program product comprises a computer program or instructions for performing the method according to any one of claims 1 to 7.

19. A chip, wherein the chip is coupled to a memory, and is configured to read and execute program instructions stored in the memory, to implement the method according to any one of claims 1 to 7.

FIG. 1

200

210　　　　　　　220

FIG. 2

FIG. 3

Subcarrier N$_{fft}$−1

$x(K-1)$

$x(0)$

Subcarrier 0

IFFT

Parallel/serial conversion

Add a cyclic prefix

(1)

Real part

Frequency [MHz]

(2)

Amplitude

— Ideal OOK
— MC-OOK generated with 32 subcarriers

Time domain sample

(3)

FIG. 4

Broadband transmission

Channel amplitude response

Frequency
(1)

Narrowband transmission

Channel amplitude response

Frequency
(2)

FIG. 5

<u>600</u>

Perform first modulation on first data to generate a
first amplitude shift keying signal, where the first
amplitude shift keying signal is carried on a first
frequency band ⟩ S610

Perform second modulation on the first data to
generate a second amplitude shift keying signal,
where the second amplitude shift keying signal is
carried on a second frequency band ⟩ S620

Send the first amplitude shift keying signal and the
second amplitude shift keying signal ⟩ S630

FIG. 6

FIG. 7(1)

FIG. 7(2)

OOK signals
(first OOK signal and
second OOK signal)

Bandpass filter
BPF ($f_0$)

Bandpass filter
BPF ($f_1$)

Envelop detector

Envelop detector

Adder

Determining

First data

FIG. 8

Branch1 after bandpass filtering

(1)

Branch2 after bandpass filtering

(2)

Summation of two branches

(3)

FIG. 9

FIG. 10

OOK signal

Bandpass filter BPF ($f_0$) → Envelop detector envelop detector → Comparator comparator → First data

Bandpass filter BPF ($f_1$) → Envelop detector envelop detector →

FIG. 11

Frequency band #4 (61 to 70)
Frequency band #3 (49 to 58)
Frequency band #2 (37 to 46)
Frequency band #1 (25 to 34)

FIG. 12

1300

Perform channel encoding on data #1 to determine data #2 — S1310

Perform first modulation on the data #2 to generate a first amplitude shift keying signal — S1320

Perform second modulation on the data #2 to generate a second amplitude shift keying signal — S1330

Send the first amplitude shift keying signal and the second amplitude shift keying signal — S1340

FIG. 13

EP 4 580 136 A1

FIG. 14(1)

FIG. 14(2)

EP 4 580 136 A1

1500

```
┌─────────────────────────────────────────┐
│                                         │
│   ┌─────────────────────────────────┐   │
│   │   Transceiver unit 1510         │   │
│   └─────────────────────────────────┘   │
│                    │                    │
│   ┌─────────────────────────────────┐   │
│   │   Processing unit 1520          │   │
│   └─────────────────────────────────┘   │
│                                         │
└─────────────────────────────────────────┘
```

FIG. 15

1600

```
┌───────────────────────────────────────────────┐
│                                               │
│  ┌──────────────────┐    ┌──────────────────┐ │
│  │ Processor 1610   │────│ Transceiver 1630 │ │
│  └──────────────────┘    └──────────────────┘ │
│           │                                    │
│  ┌──────────────────┐                          │
│  │ Memory 1620      │                          │
│  └──────────────────┘                          │
│                                               │
└───────────────────────────────────────────────┘
```

FIG. 16

```
┌───────────────────────────────────────────┐
│           Chip system 1700                │
│   ┌─────────────────────────────────┐     │
│   │   Logic circuit 1710            │     │
│   └─────────────────────────────────┘     │
│                  │                        │
│   ┌─────────────────────────────────┐     │
│   │   Input/Output interface 1720   │     │
│   └─────────────────────────────────┘     │
│                                           │
└───────────────────────────────────────────┘
```

FIG. 17

## INTERNATIONAL SEARCH REPORT

| International application No. |
| --- |
| **PCT/CN2023/125033** |

| A. | CLASSIFICATION OF SUBJECT MATTER |
| --- | --- |

H04L 27/04(2006.01)i

According to International Patent Classification (IPC) or to both national classification and IPC

| B. | FIELDS SEARCHED |
| --- | --- |

Minimum documentation searched (classification system followed by classification symbols)

IPC: H04L,H04W

Documentation searched other than minimum documentation to the extent that such documents are included in the fields searched

Electronic data base consulted during the international search (name of data base and, where practicable, search terms used)

CNTXT, ENTXTC, DWPI: 第二, 第一, 幅, 键控, 频, 载波, ASK, second, first, amplitude shift keying, frequency, carrier

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 103188201 A (ADVANTEST CORP.) 03 July 2013 (2013-07-03) description, paragraphs 0093-0096, and figure 10 | 1-19 |
| A | CN 104885387 A (RAKUTEN GROUP, INC.) 02 September 2015 (2015-09-02) entire document | 1-19 |
| A | JP 2000049873 A (MATSUSHITA DENKI SANGYO K.K.) 18 February 2000 (2000-02-18) entire document | 1-19 |
| A | JP 2016092574 A (MITSUBISHI ELECTRIC CORP.) 23 May 2016 (2016-05-23) entire document | 1-19 |
| A | US 2007253468 A1 (MICREL INC.) 01 November 2007 (2007-11-01) entire document | 1-19 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 December 2023** | **12 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/125033**

| Patent document cited in search report | | | Publication date (day/month/year) | Patent family member(s) | | | Publication date (day/month/year) |
|---|---|---|---|---|---|---|---|
| CN | 103188201 | A | 03 July 2013 | US | 2013170583 | A1 | 04 July 2013 |
| | | | | KR | 20130076694 | A | 08 July 2013 |
| | | | | TW | 201347444 | A | 16 November 2013 |
| | | | | JP | 2013138323 | A | 11 July 2013 |
| CN | 104885387 | A | 02 September 2015 | US | 2015318983 | A1 | 05 November 2015 |
| | | | | JPWO | 2014104284 | A1 | 19 January 2017 |
| | | | | WO | 2014104284 | A1 | 03 July 2014 |
| | | | | WO | 2014104285 | A1 | 03 July 2014 |
| | | | | TW | 201431306 | A | 01 August 2014 |
| | | | | US | 2015309151 | A1 | 29 October 2015 |
| | | | | EP | 2940905 | A1 | 04 November 2015 |
| | | | | EP | 2940906 | A1 | 04 November 2015 |
| | | | | ES | 2757876 | T3 | 30 April 2020 |
| | | | | ES | 2633457 | T3 | 21 September 2017 |
| | | | | JPWO | 2014104285 | A1 | 19 January 2017 |
| JP | 2000049873 | A | 18 February 2000 | None | | | |
| JP | 2016092574 | A | 23 May 2016 | JP | 6523657 | B2 | 05 June 2019 |
| US | 2007253468 | A1 | 01 November 2007 | CA | 2644657 | A1 | 15 November 2007 |
| | | | | BRPI | 0710967 | A2 | 28 February 2012 |
| | | | | AU | 2007248252 | A1 | 15 November 2007 |
| | | | | WO | 2007130874 | A2 | 15 November 2007 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211307799X

- CN 202211518236